# EUROPÄISCHE PATENTSCHRIFT

(11) **EP 2 503 125 B1**
(45) Veröffentlichungstag und Bekanntmachung des Hinweises auf die Patenterteilung: **19.11.2014**
(21) Anmeldenummer: 11159694.6
(22) Anmeldetag: 25.03.2011
(51) Int. Cl.: F02B 37/007, F02B 67/10, F02F 1/24, F02F 1/42, F01N 13/00

(54) **Mit zwei Abgasturboladern ausgestattete Brennkraftmaschine und Verfahren zum Betreiben einer derartigen Brennkraftmaschine**
Internal combustion engine equipped with two turbochargers and method to operate such an engine
Moteur à combustion interne équipé de deux turbocompresseurs et procédé de fonctionnement d'un tel moteur

(43) Veröffentlichungstag der Anmeldung: 26.09.2012
(73) Patentinhaber: Ford Global Technologies, LLC, Dearborn, MI 48126 (US)
(72) Erfinder: Friedfeldt, Rainer, 50354 Hürth (DE); Kuhlbach, Kai, 51427 Bergisch Gladbach (DE); Steiner, Bernd, 51467 Bergisch-Gladbach (DE)
(74) Vertreter: Drömer, Hans-Carsten

(56) Entgegenhaltungen:
- DE-A1-102007 057 310
- JP-A- 5 156 960
- US-A- 4 993 227
- US-A1- 2010 326 406

## Beschreibung

Die Erfindung betrifft eine aufgeladene Brennkraftmaschine mit mindestens zwei Abgasturboladern und mindestens einem Zylinderkopf mit mindestens zwei entlang der Längsachse des Zylinderkopfes in Reihe angeordneten Zylindern, von denen jeder mindestens eine Auslaßöffnung zum Abführen der Abgase aufweist, an die sich eine Abgasleitung anschließt, bei der die Abgasleitungen von mindestens zwei Zylindern innerhalb des mindestens einen Zylinderkopfes unter Ausbildung von zwei integrierten Abgaskrümmern zu zwei Gesamtabgasleitungen zusammenführen, welche auf der Seite der Abgaskrümmer, die den Zylindern abgewandt ist, aus dem Zylinderkopf - entlang der Längsachse des Zylinderkopfes beabstandet zueinander - austreten, wobei eine erste Gesamtabgasleitung mit dem Eintrittsbereich der Turbine eines ersten Abgasturboladers und eine zweite Gesamtabgasleitung mit dem Eintrittsbereich der Turbine eines zweiten Abgasturboladers verbunden ist.

Des Weiteren betrifft die Erfindung ein Verfahren zum Betreiben einer derartigen Brennkraftmaschine.

Im Rahmen der vorliegenden Erfindung umfaßt der Begriff Brennkraftmaschine insbesondere Ottomotoren, aber auch Dieselmotoren und Hybrid-Brennkraftmaschinen.

Brennkraftmaschinen verfügen über einen Zylinderblock und mindestens einen Zylinderkopf, die zur Ausbildung der Zylinder miteinander verbunden werden. Um den Ladungswechsel zu steuern, benötigt eine Brennkraftmaschine Steuerorgane - in der Regel Hubventile - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Häufig dient der Zylinderkopf zur Aufnahme des Ventiltriebs.

Im Rahmen des Ladungswechsels erfolgt das Ausschieben der Verbrennungsgase über die Auslaßöffnungen der Zylinder und das Füllen der Brennräume, d. h. das Ansaugen des Frischgemisches bzw. der Frischluft über die Einlaßöffnungen. Es ist die Aufgabe des Ventiltriebes die Einlaß- und Auslaßöffnungen rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten.

Die Auslaßkanäle, d. h. Abgasleitungen, die sich an die Auslaßöffnungen anschließen, sind nach dem Stand der Technik zumindest teilweise im Zylinderkopf integriert. Die Abgasleitungen der mindestens zwei Zylinder werden in der Regel zu einer gemeinsamen Gesamtabgasleitung oder aber - wie bei der erfindungsgemäßen Brennkraftmaschine - zu zwei oder mehreren Gesamtabgasleitungen zusammengeführt. Die Zusammenführung von Abgasleitungen zu einer Gesamtabgasleitung wird im Allgemeinen und im Rahmen der vorliegenden Erfindung als Abgaskrümmer bezeichnet, wobei das Teilstück der Gesamtabgasleitung, welches stromaufwärts einer in der Gesamtabgasleitung angeordneten Turbine liegt, erfindungsgemäß als zum Abgaskrümmer gehörend angesehen wird.

Stromabwärts der Krümmer werden die Abgase vorliegend zwecks Aufladung der Brennkraftmaschine den Turbinen von mindestens zwei Abgasturboladern zugeführt und gegebenenfalls einem oder mehreren Systemen zur Abgasnachbehandlung.

Die Vorteile eines Abgasturboladers beispielsweise im Vergleich zu einem mechanischen Lader bestehen darin, dass keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht, somit die bereitgestellte Leistung mindert und auf diese Weise den Wirkungsgrad nachteilig beeinflußt, nutzt der Abgasturbolader die Abgasenergie der heißen Abgase.

Ein Abgasturbolader umfaßt einen Verdichter und eine Turbine, die auf derselben Welle angeordnet sind. Der heiße Abgasstrom wird der Turbine zugeführt und entspannt sich, wodurch die Welle in Drehung versetzt wird. Aufgrund der hohen Drehzahlen wird üblicherweise eine Gleitlagerung für die Welle vorgesehen. Die vom Abgasstrom an die Turbine bzw. die Welle abgegebene Energie wird für den Antrieb des ebenfalls auf der Welle angeordneten Verdichters genutzt. Der Verdichter fördert und komprimiert die ihm zugeführte Ladeluft, wodurch die Aufladung der Zylinder erreicht wird. Gegebenenfalls ist eine Ladeluftkühlung vorgesehen, mit der die komprimierte Verbrennungsluft vor Eintritt in die Zylinder gekühlt wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck gesteigert werden. Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist.

Die Auslegung der Abgasturboladung bereitet häufig Schwierigkeiten, da grundsätzlich eine spürbare Leistungssteigerung in allen Drehzahlbereichen angestrebt wird, nach dem Stand der Technik aber ein starker Drehmomentabfall bei Unterschreiten einer bestimmten Drehzahl beobachtet wird. Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich könnte dem Abfall des Ladedruckes durch eine Verkleinerung des Turbinenquerschnittes und der damit einhergehenden Steigerung des Turbinendruckverhältnisses entgegengewirkt werden. Damit wird der Drehmomentabfall aber nur weiter zu geringeren Drehzahlen hin verschoben. Zudem sind dieser Vorgehensweise, d. h. der Verkleinerung des Turbinenquerschnittes, Grenzen gesetzt, da die gewünschte Aufladung und Leistungssteigerung auch bei hohen Drehzahlen bzw. großen Abgasmengen uneingeschränkt möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat den Nachteil, dass das Aufladeverhalten bei höheren Drehzahlen bzw. größeren Abgasmengen unzureichend ist.

Die Drehmomentcharakteristik einer aufgeladenen Brennkraftmaschine kann des Weiteren durch mehrere parallel angeordnete Turbolader, d. h. durch mehrere parallel angeordnete Turbinen von kleinem Turbinenquerschnitt verbessert werden, wobei mit steigender Abgasmenge Turbinen zugeschaltet werden.

Eine aufgeladene Brennkraftmaschine mit mindestens zwei parallel angeordneten Abgasturboladern ist auch Gegenstand der vorliegenden Erfindung. Vorzugsweise wird eine Turbine als zuschaltbare Turbine ausgebildet, welche nur bei größeren Abgasmengen aktiviert wird. Im Vergleich zu Ausführungsformen, bei denen nur ein einzelner Abgasturbolader eingesetzt wird, ist der Turbinenquerschnitt bzw. das dazugehörige Laufzeug jeder der beiden parallel angeordneten Turbinen klein bzw. leicht, was hinsichtlich einer Beschleunigung des Laufzeugs Vorteile bietet.

Erfindungsgemäß sind die erste Gesamtabgasleitung mit dem Eintrittsbereich der Turbine eines ersten Abgasturboladers und die zweite Gesamtabgasleitung mit dem Eintrittsbereich der Turbine eines zweiten Abgasturboladers verbunden.

Man ist grundsätzlich bemüht, die Abgasturbolader bzw. die Turbinen möglichst nahe an den Auslaßöffnungen der mindestens zwei Zylinder anzuordnen, um auf diese Weise zum einen die Abgasenthalpie der heißen Abgase, die maßgeblich vom Abgasdruck und der Abgastemperatur bestimmt wird, optimal nutzen zu können und zum anderen ein schnelles Ansprechverhalten der Turbolader zu gewährleisten. In diesem Zusammenhang wird daher grundsätzlich angestrebt, die thermische Trägheit und das Volumen des Leitungssystems stromaufwärts der Turbinen zu minimieren, was durch Reduzierung der Masse und der Länge der Abgasleitungen erreicht werden kann.

Zielführend dabei ist unter anderem das Zusammenführen der Abgasleitungen innerhalb des Zylinderkopfes, d. h. die Integration der Abgaskrümmer in den mindestens einen Zylinderkopf. Die Gesamtwegstrecke und das Volumen des Leitungssystems stromaufwärts der Turbinen werden reduziert. Diese Maßnahme führt auch zu einer kompakten Bauweise, einer geringeren Anzahl an Bauteilen und folglich zu einer Verringerung der Kosten, insbesondere der Montage- und Bereitstellungskosten. Die kompakte Bauweise ermöglicht darüber hinaus ein dichtes Packaging der Antriebseinheit im Motorraum. Eine Brennkraftmaschine, bei der die Abgasleitungen von mindestens zwei Zylindern innerhalb des Zylinderkopfes unter Ausbildung von zwei integrierten Abgaskrümmern zu zwei Gesamtabgasleitungen zusammenführen, ist auch Gegenstand der vorliegenden Erfindung.

Auch wenn das Abgassystem stromaufwärts der Turbinen - wie dargelegt - hinsichtlich Leitungslänge, Volumen und Bauraumbedarf durch die Integration in den Zylinderkopf optimiert ist, weisen Brennkraftmaschine der vorliegenden Art nach dem Stand der Technik stromabwärts der Turbinen immer noch ein weit verzweigtes Leitungssystem auf, um das Abgas aus den beiden Turbinen abzuführen, in einer gemeinsamen Leitung zu sammeln und einer Abgasnachbehandlung zu zuführen.

Beispiele aus dem Stand der Technik finden sich in US 4 993 227 A und JP 5 156 960 A.

Ein derartiges Leitungssystem steht einer kompakten Bauweise bzw. einem dichten Packaging entgegen. Darüber hinaus stellen die außen, benachbart zum Zylinderkopf bzw. Zylinderblock verlaufenden Leitungen eine permanente Hitzequelle dar, welche hinsichtlich anderer Bauteile, insbesondere hinsichtlich aus Kunststoff gefertigten Teilen, problematisch sein kann.

Vor dem Hintergrund des oben Gesagten ist es eine Aufgabe der vorliegenden Erfindung, eine aufgeladene Brennkraftmaschine gemäß dem Oberbegriff des Anspruchs 1 bereitzustellen, die über ein verbessertes Leitungssystem stromabwärts der Turbinen verfügt.

Eine weitere Teilaufgabe der vorliegenden Erfindung ist es, ein Verfahren zum Betreiben einer derartigen Brennkraftmaschine aufzuzeigen bei der die Turbine eines Abgasturboladers als zuschaltbare Turbine ausgeführt ist.

Gelöst wird die erste Teilaufgabe durch eine aufgeladene Brennkraftmaschine mit mindestens zwei Abgasturboladern und mindestens einem Zylinderkopf mit mindestens zwei entlang der Längsachse des Zylinderkopfes in Reihe angeordneten Zylindern, von denen jeder mindestens eine Auslaßöffnung zum Abführen der Abgase aufweist, an die sich eine Abgasleitung anschließt, bei der die Abgasleitungen von mindestens zwei Zylindern innerhalb des mindestens einen Zylinderkopfes unter Ausbildung von zwei integrierten Abgaskrümmern zu zwei Gesamtabgasleitungen zusammenführen, welche auf der Seite der Abgaskrümmer, die den Zylindern abgewandt ist, aus dem Zylinderkopf - entlang der Längsachse des Zylinderkopfes beabstandet zueinander - austreten, wobei eine erste Gesamtabgasleitung mit dem Eintrittsbereich der Turbine eines ersten Abgasturboladers und eine zweite Gesamtabgasleitung mit dem Eintrittsbereich der Turbine eines zweiten Abgasturboladers verbunden ist, und die dadurch gekennzeichnet ist, dass der mindestens eine Zylinderkopf einen balkonartigen Vorsprung aufweist, der zwischen den aus dem mindestens einen Zylinderkopf austretenden Gesamtabgasleitungen angeordnet ist und der auf jeder der beiden Seiten, die jeweils einer Turbine zugewandt ist, eine Öffnung aufweist, die mit dem Austrittsbereich der jeweiligen Turbine verbunden ist, wobei die sich an die beiden Öffnungen anschließenden Kanäle zu einer gemeinsamen Leitung zusammenführen, welche aus dem Vorsprung austritt.

Erfindungsgemäß wird der Zylinderkopf mit einem Vorsprung ausgebildet, der auslaßseitig zwischen den beiden am Zylinderkopf angeordneten Turbinen liegt und mindestens drei Öffnungen aufweist, von denen zwei dem Abführen des Abgases aus den Turbinen und dem Sammeln des Abgases dienen, wohingegen eine dritte Öffnung dem Weiterleiten des Abgases via einer gemeinsamen Leitung, beispielsweise zu einer Abgasnachbehandlung, dient.

Dadurch wird das aus dem Stand der Technik bekannte weit verzweigte Leitungssystem stromabwärts der Turbinen obsolet bzw. deutlich minimiert. Die Gesamtlänge aller Leitungen, somit auch das Leitungsvolumen und der beanspruchte Bauraum werden spürbar verkürzt bzw. verringert.

Das erfindungsgemäße Leitungssystem, welches sich durch den am Zylinderkopf ausgebildeten Vorsprung auszeichnet, ermöglicht eine kompakte Bauweise bzw. ein dichtes Packaging im Motorraum. Der vom Leitungssystem beanspruchte Bauraum ist vergleichsweise klein, so dass konstruktive Einschränkungen, die sich aus der Tatsache ergeben, dass das im Betrieb heiße Leitungssystem eine permanente Hitzequelle darstellt, nahezu nicht gegeben sind.

Das erfindungsgemäße Leitungssystem bietet auch Vorteile hinsichtlich der Abgasnachbehandlung. Ähnlich wie bei den Turbinen ist man auch bei den verschiedenen Abgasnachbehandlungssystemen bemüht, diese möglichst nahe am Auslaß der Brennkraftmaschine, d. h. den Auslaßöffnungen der Zylinder, anzuordnen. Den Abgasen soll wenig Gelegenheit, d. h. Zeit und Wegstrecke, zur Abkühlung eingeräumt werden, damit die Abgasnachbehandlungssysteme möglichst schnell ihre Betriebstemperatur bzw. Anspringtemperatur erreichen, insbesondere nach einem Kaltstart der Brennkraftmaschine.

Während es hinsichtlich der Turbinen zielführend ist, die thermische Trägheit des Leitungssystems stromaufwärts der Turbinen durch Reduzierung der Masse und der Länge, beispielsweise durch Integration der Krümmer, zu minimieren, ist es im Hinblick auf die Abgasnachbehandlung - hierzu ergänzend - sinnvoll, die thermische Trägheit des Leitungssystems stromabwärts der Turbinen durch Reduzierung der Masse und der Länge zu minimieren. Erfindungsgemäß wird dies dadurch erreicht, dass ein Vorsprung integral mit dem Zylinderkopf ausgebildet wird, der wesentliche Funktionen bzw. Teile des notwendigen Leitungssystems übernimmt bzw. in sich vereint.

Damit wird die erste der Erfindung zugrunde liegende Aufgabe gelöst, nämlich eine aufgeladene Brennkraftmaschine bereitzustellen, die über ein verbessertes Leitungssystem stromabwärts der Turbinen verfügt.

Die beiden Turbinen werden einlaßseitig direkt am Zylinderkopf befestigt, vorzugsweise unter Verwendung von Befestigungsmitteln wie Schrauben, und auslaßseitig an dem mit dem Zylinderkopf monolithisch ausgebildeten Vorsprung, wiederum vorzugsweise unter Verwendung von Befestigungsmitteln wie Schrauben.

Eine erfindungsgemäße Brennkraftmaschine kann auch zwei Zylinderköpfe aufweisen, bei der die Zylinder auf zwei Zylinderbänke verteilt angeordnet sind.

Erfindungsgemäß müssen nicht die Abgasleitungen sämtlicher Zylinder eines Zylinderkopfes zu zwei Gesamtabgasleitungen zusammenführen, sondern nur die Abgasleitungen von mindestens zwei Zylindern in der beschriebenen Weise gruppiert sein.

Vorteilhaft sind aber insbesondere Ausführungsformen, bei denen die Abgasleitungen sämtlicher Zylinder des mindestens einen Zylinderkopfes zu zwei Gesamtabgasleitungen zusammenführen.

Weitere vorteilhafte Ausführungsformen der erfindungsgemäßen Brennkraftmaschine werden im Zusammenhang mit den Unteransprüchen erörtert.

Vorteilhaft sind Ausführungsformen der aufgeladenen Brennkraftmaschine, bei denen die beiden aus dem mindestens einen Zylinderkopf austretenden Gesamtabgasleitungen einen Abstand L entlang der Längsachse des Zylinderkopfes aufweisen, für den gilt: L ≥ D, wobei D der Durchmesser eines Zylinders ist.

Die Ausbildung bzw. Anordnung des zum Zylinderkopf gehörenden Vorsprungs erfordert eine ausreichende Beabstandung der beiden Turbinen. Ein gewisser Abstand der beiden aus dem Zylinderkopf austretenden Gesamtabgasleitungen kommt dem entgegen bzw. korrespondiert damit in vorteilhafter Weise. Bei flüssigkeitsgekühlten Brennkraftmaschinen erleichtern deutlich voneinander beabstandete Gesamtabgasleitungen die Anordnung von Kühlmittelkanälen bzw. Kühlmittelmänteln im Zylinderkopf, insbesondere zwischen den beiden Gesamtabgasleitungen.

Bei Zylinderköpfen mit mehreren in Reihe angeordneten Zylindern können sich entlang der Längsachse des Zylinderkopfes zueinander beabstandete Gesamtabgasleitungen darüber hinaus vorteilhaft auf die Geometrie der beiden zugehörigen Abgaskrümmer auswirken. Da vorliegend kein Zusammenführen der Gesamtabgasleitungen stromaufwärts der Turbinen beabsichtigt ist, kann jede der beiden Gesamtabgasleitungen im Hinblick auf ein möglichst kleines Volumen der Abgaskrümmer ausgebildet bzw. angeordnet werden. Die Vorteile eines solchen Abgassystems wurden bereits ausführlich dargelegt.

Vorteilhaft sind aus den genannten Gründen auch Ausführungsformen der aufgeladenen Brennkraftmaschine, bei denen die beiden aus dem mindestens einen Zylinderkopf austretenden Gesamtabgasleitungen einen Abstand L entlang der Längsachse des Zylinderkopfes aufweisen, für den gilt: L ≥ 1.5 D, vorzugsweise L ≥ 2.0 D, wobei D der Durchmesser eines Zylinders ist.

Bei Brennkraftmaschinen, bei denen der mindestens eine Zylinderkopf an einer Montage-Stirnseite mit einem Zylinderblock verbindbar ist, sind Ausführungsformen der aufgeladenen Brennkraftmaschine vorteilhaft, die dadurch gekennzeichnet sind, dass die gemeinsame Leitung, die aus dem Vorsprung austritt, auf der der Montage-Stirnseite zugewandten Seite austritt, d. h. in Richtung bzw. entlang des Zylinderblocks führt.

Diese Ausführungsform trägt dem Umstand Rechnung, dass auf der der Montage-Stirnseite abgewandten Seite in der Regel eine Vielzahl von aus Kunststoff gefertigten Bauteilen, wie beispielsweise die Abdeckung eines Ventiltriebs oder Teile des Ansaugsystems, angeordnet sind, und die Antriebseinheit häufig unmittelbar unterhalb der Motorhaube im Fahrzeug angeordnet ist, so dass der Bauraum nicht gegeben ist, um die gemeinsame Leitung entlang des Zylinderkopfes, gegebenenfalls über den Zylinderkopf hinweg, weiterzuführen.

Zu berücksichtigen ist in diesem Zusammenhang auch, dass das sich anschließende abgasführende Leitungssystem bis hin zum Auslaß in die Umgebung im Wesentlichen am Fahrzeugboden verläuft, so dass es sinnvoll ist, die gemeinsame, aus dem Vorsprung austretende Leitung nach unten, d. h. in Richtung Fahrzeugboden, zu führen.

Vorteilhaft sind Ausführungsformen der aufgeladenen Brennkraftmaschine, bei denen
- mindestens zwei Zylinder in der Art konfiguriert sind, dass sie zwei Gruppen mit jeweils mindestens einem Zylinder bilden, und
- die Abgasleitungen der Zylinder jeder Zylindergruppe unter Ausbildung eines integrierten Abgaskrümmers innerhalb des mindestens einen Zylinderkopfes jeweils zu einer Gesamtabgasleitung zusammenführen.

Vorliegend wird jede Gesamtabgasleitung nur mit dem Abgas bestimmter Zylinder versorgt bzw. beaufschlagt.

Diese Ausführungsform gestattet es, die Zylinder in geeigneter Weise zu gruppieren bzw. voneinander zu trennen, beispielsweise in der Art, dass sich die dynamischen Wellenvorgänge in den Abgasleitungen einer Zylindergruppe möglichst wenig nachteilig beeinflussen, beispielsweise sich die in den Abgasleitungen ausbreitenden Druckwellen nicht gegenseitig abschwächen. Damit sich die in einer Zylindergruppe zusammengefaßten Zylinder nicht gegenseitig beim Ladungswechsel nachteilig beeinflussen, werden die Zylinder vorzugsweise derart gruppiert, dass die Zylinder einer Zylindergruppe einen möglichst großen Versatz hinsichtlich ihrer Arbeitsprozesse aufweisen.

Wenn zu Beginn des Ladungswechsels eine Auslaßöffnung geöffnet wird, strömen die Verbrennungsgase aufgrund des gegen Ende der Verbrennung im Zylinder vorherrschenden hohen Druckniveaus und der damit verbundenen hohen Druckdifferenz zwischen Brennraum und Abgasleitung mit hoher Geschwindigkeit durch die Auslaßöffnung in die Abgasleitung. Dieser druckgetriebene Strömungsvorgang wird durch eine hohe Druckspitze begleitet, die auch als Vorlastausstoß bezeichnet wird und sich entlang der Abgasleitungen mit Schallgeschwindigkeit fortpflanzt.

Hinsichtlich des Ladungswechsels ist es vorteilhaft, die Zylinder in der Art zu gruppieren, dass, wenn die mindestens eine Auslaßöffnung eines Zylinders einer Gruppe öffnet, die Auslaßöffnungen der anderen Zylinder dieser Gruppe geschlossen sind bzw. die Auslaßöffnungen der anderen Zylinder dieser Gruppe zu dem Zeitpunkt geschlossen sind, zu dem die Druckwelle bzw. der Vorlastausstoß des sich öffnenden Zylinders an der Auslaßöffnung eines anderen Zylinders ankommt bzw. erwartet wird. Auf diese Weise kann ein Rückströmen von Abgas durch die Auslaßöffnung in den Brennraum vermieden werden.

Da sich die einzelnen Abgasleitungen durch die Integration der Krümmer in den Zylinderkopf verkürzen, steigt grundsätzlich die Gefahr, dass sich die Zylinder gegenseitig beim Ladungswechsel behindern bzw. sich die dynamischen Wellenvorgänge in den Abgasleitungen der Zylinder nachteilig überlagern. Insofern ist eine Gruppierung der Zylinder im Zusammenhang mit der erfindungsgemäß obligatorischen Integration der Krümmer besonders vorteilhaft.

Eine Gruppierung der Zylinder schafft zudem mehr Freiheiten bei der Festlegung der Steuerzeiten der Ventile eines Zylinder, da sich gegebenenfalls nachteilig beeinflussende Zylindern in geeigneter Weise voneinander getrennt werden können, nämlich vorzugsweise in der Art, dass die Zylinder einer Zylindergruppe einen möglichst großen Versatz hinsichtlich ihrer Arbeitsprozesse aufweisen. So können grundsätzlich die Öffnungszeiten der Ventile, insbesondere der Auslaßventile, verlängert werden bzw. die Schließzeit der Auslaßventile nach spät verschoben werden, ohne dass zu befürchten ist, dass der Ladungswechsel eines Zylinders, insbesondere der Vorlastausstoß eines Zylinders, für ein Rückströmen von Abgas durch die Auslaßöffnung eines anderen Zylinders in den Brennraum sorgt. Es ergeben sich Vorteile in Bezug auf den Wirkungsgrad und die Schadstoffemissionen.

Bei einer aufgeladenen Brennkraftmaschine der in Rede stehenden Art, bei welcher der mindestens eine Zylinderkopf mindestens drei in Reihe angeordnete Zylinder aufweist, sind Ausfiihrungsformen vorteilhaft, die dadurch gekennzeichnet sind, dass die erste Zylindergruppe die außenliegenden Zylinder und die zweite Zylindergruppe den mindestens einen innenliegenden Zylinder umfaßt.

Weist der mindestens eine Zylinderkopf vier in Reihe angeordnete Zylinder auf, können Ausführungsformen vorteilhaft sein, bei denen die erste Zylindergruppe die beiden außenliegenden Zylinder und die zweite Zylindergruppe die beiden innenliegenden Zylinder umfaßt. Diese Konfiguration der Zylinder trägt beispielsweise dem Umstand Rechnung, dass die Zylinder eines Vier-Zylinder-Reihenmotors in der Regel in der Reihenfolge 1-3-4-2 gezündet werden, wobei die Zylinder beginnend mit einem außenliegenden Zylinder der Reihe nach durchnumeriert sind. Die vorgeschlagene Gruppierung der Zylinder sorgt dafür, dass die beiden Zylinder sowohl der ersten als auch der zweiten Zylindergruppe einen Zündabstand von 360°KW aufweisen. Die zwei Zylinder jeder Zylindergruppe weisen somit den größtmöglichen Versatz hinsichtlich ihrer Arbeitsprozesse auf.

Bei einer aufgeladenen Brennkraftmaschine, bei welcher der mindestens eine Zylinderkopf mindestens vier in Reihe angeordnete Zylinder aufweist, sind aber auch Ausführungsformen vorteilhaft, die dadurch gekennzeichnet sind, dass jede Zylindergruppe zwei benachbarte Zylinder umfaßt. Eine derartige Gruppierung der Zylinder unterstützt die Ausbildung kleinvolumiger Abgaskrümmer durch Reduzierung der Leitungslänge.

Vorteilhaft sind Ausführungsformen der aufgeladenen Brennkraftmaschine, bei denen jeder Zylinder mindestens zwei Auslaßöffnungen zum Abführen der Abgase aufweist, wobei sich an jede Auslaßöffnung eine Abgasleitung anschließt.

Im Rahmen des Ladungswechsels wird eine schnelle Freigabe eines möglichst großen Strömungsquerschnitts angestrebt, um die Drosselverluste in der austretenden Gasströmung möglichst gering zu halten und ein effektives Abführen der Abgase zu gewährleisten. Das Vorsehen von zwei oder mehr Auslaßöffnungen je Zylinder ist dabei zielführend.

Vorteilhaft können Ausführungsformen der aufgeladenen Brennkraftmaschine sein, bei denen die zwei integrierten Abgaskrümmer miteinander verbunden sind.

Das Verbinden der beiden Krümmer ermöglicht es, die Turbine eines Abgasturboladers unter Verwendung einfacher Mittel als zuschaltbare Turbine auszuführen, beispielsweise indem stromaufwärts dieser Turbine ein Absperrelement in der dazugehörigen Gesamtabgasleitung angeordnet wird, welches im aktivierten, d. h. zugeschalteten, Zustand der Turbine geöffnet und im deaktivierten, d. h. abgeschalteten Zustand, geschlossen ist. Ein derartiges Vorgehen wäre bei voneinander getrennten Krümmern nicht möglich, da dies infolge einer unzureichenden Abgasabführung zu einer unakzeptablen Verschlechterung des Ladungswechsels führen würde.

Demnach sind bei Brennkraftmaschinen, deren Abgaskrümmer miteinander verbunden sind, Ausführungsformen vorteilhaft, bei denen die Turbine eines Abgasturboladers als zuschaltbare Turbine ausgeführt ist, vorzugsweise dadurch, dass stromaufwärts der zuschaltbaren Turbine ein Absperrelement in der dazugehörigen Gesamtabgasleitung angeordnet ist.

Vorteilhaft können auch Ausführungsformen der aufgeladenen Brennkraftmaschine sein, bei denen die zuschaltbare Turbine eine variable Turbinengeometrie aufweist. Das Deaktivieren, d. h. Abschalten der Turbine erfolgt dann durch Verstellen der Turbinengeometrie in Richtung Schließstellung. Ein zusätzliches Absperrelement stromaufwärts der Turbine ist nicht erforderlich.

Die eingesetzten Turbinen können grundsätzlich mit einer variablen Turbinengeometrie ausgestattet sein, die durch Verstellen an den jeweiligen Betriebspunkt der Brennkraftmaschine angepaßt werden.

Die Turbinen können auch als Waste-Gate-Turbine ausgeführt werden, bei der Abgas via Bypaßleitung an der Turbine vorbeigeführt wird, sobald der Abgasmassenstrom eine kritische Größe überschreitet. Hierzu ist ein Absperrelement in der Bypaßleitung vorzusehen.

Die Bypaßleitung zweigt aus dem ersten bzw. zweiten Abgaskrümmer ab und mündet in die erste bzw. zweite Gesamtabgasleitung oder in die gemeinsame Leitung. In diesem Zusammenhang sind Ausführungsformen der aufgeladenen Brennkraftmaschine vorteilhaft, bei denen die Bypaßleitung in den mindestens einen Zylinderkopf integriert ist, wobei der erfindungsgemäße Vorsprung die Ausbildung dieser Ausführungsform erleichtert bzw. erst ermöglicht.

Eine Möglichkeit, die Turbine eines Abgasturboladers als zuschaltbare Turbine auszuführen, ohne dass die beiden Krümmer miteinander verbunden werden müssen, wird im Folgenden beschrieben.

Vorteilhaft können nämlich Ausführungsformen der aufgeladenen Brennkraftmaschine sein, bei denen jeder Zylinder mindestens zwei Auslaßöffnungen aufweist, von denen mindestens eine als zuschaltbare Auslaßöffnung ausgebildet ist, wobei die Abgasleitungen der zuschaltbaren Auslaßöffnungen von mindestens zwei Zylindern unter Ausbildung des ersten Abgaskrümmers zu der ersten Gesamtabgasleitung zusammenführen, welche mit der Turbine des ersten Abgasturboladers verbunden ist, und die Abgasleitungen der anderen Auslaßöffnungen der mindestens zwei Zylinder unter Ausbildung des zweiten Abgaskrümmers zu der zweiten Gesamtabgasleitung zusammenführen, welche mit der Turbine des zweiten Abgasturboladers verbunden ist.

Um eine Turbine, vorliegend die Turbine des ersten Abgasturboladers, als zuschaltbare Turbine auszuführen, werden die Abgasleitungen von mindestens zwei Zylindern gruppenweise in der Art zusammen geführt, dass von jedem dieser Zylinder mindestens eine Abgasleitung zu der Turbine des ersten Abgasturboladers und mindestens eine Abgasleitung zu der Turbine des zweiten Abgasturboladers führt, wobei die Auslaßöffnungen der Abgasleitungen, die zu der ersten Turbine führen, als zuschaltbare Auslaßöffnungen ausgeführt sind. Nur bei größeren Abgasmengen werden die zuschaltbaren Auslaßöffnungen im Rahmen des Ladungswechsels geöffnet und dadurch die erste Turbine aktiviert, d. h. mit Abgas beaufschlagt.

Das Betriebsverhalten der Brennkraftmaschine bei kleinen Abgasströmen verbessert sich deutlich. Zum einen wird die zuschaltbare Turbine bei kleinen Abgasmengen deaktiviert und das gesamte Abgas durch die zweite Turbine geführt. Zum anderen wird das Leitungsvolumen stromaufwärts der kontinuierlich von Abgas durchströmten zweiten Turbine durch diese Maßnahme verkleinert wird.

Nachteilig an der vorstehend beschriebenen Ausführungsform ist lediglich, dass die zuschaltbare Turbine im deaktivierten Zustand von der Abgasströmung vollständig abgeschnitten ist, d. h. der abgeschalteten Turbine keinerlei Abgas zugeführt wird. Dies resultiert aus der Verwendung separater Abgaskrümmer und dem Nichtöffnen der zuschaltbaren Auslaßöffnungen. Infolge der fehlenden Abgasanströmung vermindert sich die Drehzahl der zuschaltbaren Turbine bei Deaktivierung deutlich. Der hydrodynamische Schmierfilm baut sich ab bzw. bricht vollständig zusammen, was den Verschleiß erhöht und im Hinblick auf die Störanfälligkeit des Laders kritisch zu sehen ist.

Aus den vorstehend genannten Gründen sind daher auch Ausführungsformen der Brennkraftmaschine vorteilhaft, bei denen der erste Abgaskrümmer und der zweite Abgaskrümmer stromaufwärts der beiden Turbinen via mindestens einem nicht verschließbaren Verbindungskanal dauerhaft miteinander verbunden sind, wobei der kleinste Querschnitt A_{Quer},v des mindestens einen Verbindungskanals kleiner ist als der kleinste Querschnitt A_{Quer,Ex} einer Abgasleitung.

Die Krümmer werden gemäß der in Rede stehenden Ausführungsform miteinander verbunden. Hierzu wird mindestens ein Verbindungskanal vorgesehen, der nicht verschließbar, d. h. dauerhaft geöffnet ist, und als Überströmkanal fungiert. Dieser Verbindungskanal läßt auch bei geringen Abgasmengen einen Teil des Abgases vom zweiten Abgaskrümmer in den ersten Abgaskrümmer überströmen, so dass die zuschaltbare Turbine via zweitem Abgaskrümmer und Verbindungskanal auch im deaktivierten, d. h. abgeschalteten Zustand mit Abgas beaufschlagt wird. Dabei soll der zuschaltbaren Turbine via Verbindungskanal lediglich so viel Abgas zugeführt werden, dass die Turbinenwelle eine Mindestdrehzahl nicht unterschreitet. Das Aufrechthalten einer gewissen Mindestdrehzahl verhindert bzw. vermindert den Abbau des hydrodynamischen Schmierfilms in der Gleitlagerung der Welle des ersten Laders. Zudem verbessert sich das Ansprechverhalten der zuschaltbaren Turbine bzw. der Aufladung insgesamt, denn die zuschaltbare Turbine wird bei Aktivierung ausgehend von einer höheren Drehzahl beschleunigt. Einem vom Fahrer angeforderten Drehmoment kann vergleichsweise schnell, d. h. mit nur geringer Verzögerung entsprochen werden.

Vorteilhaft sind daher Ausführungsformen, bei denen der mindestens eine nicht verschließbare Verbindungskanal eine Drosselstelle darstellt, die eine Druckabsenkung in der durch den Verbindungskanal hindurchtretenden Abgasströmung hervorruft. Auf diese Weise wird sichergestellt, dass nur eine geringe Abgasmenge den Verbindungskanal passiert, nämlich gerade so viel Abgas, wie erforderlich ist, um eine gewisse Mindestdrehzahl der Turbinenwelle aufrecht zu erhalten.

Der mindestens eine Verbindungskanal ist entsprechend seiner Funktion zu dimensionieren, d. h. kleiner auszuführen als beispielsweise die sich an eine Auslaßöffnung anschließende Abgasleitung, welche der möglichst verlustfreien Versorgung der Turbine mit ausreichend Abgas dient.

Vorteilhaft sind Ausführungsformen der aufgeladenen Brennkraftmaschine, bei denen gilt: A_{Quer},ᵥ ≤ 0.3 A_{Quer,Ex}, insbesondere Ausführungsformen, bei denen gilt: A_{Quer,v} ≤ 0.2 A_{Quer},_{Ex}, Vorzugsweise A_{Quer,V} ≤ 0.1 A_{Quer,Ex} bzw. A_{Quer,V} ≤ 0.05 A_{Quer,Ex.}

Vorteilhaft sind Ausführungsformen der aufgeladenen Brennkraftmaschine, bei denen der mindestens eine Zylinderkopf mit einem integrierten Kühlmittelmantel ausgestattet ist. Aufgeladene Brennkraftmaschinen sind thermisch höher belastet als Saugmotoren, weshalb höhere Anforderungen an die Kühlung zu stellen sind.

Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine bzw. des Zylinderkopfes mit einem integrierten Kühlmittelmantel, d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und dem Kühlmittel in einem Wärmetauscher wieder entzogen.

Vorteilhaft sind Ausführungsformen der aufgeladenen Brennkraftmaschine, bei denen der Vorsprung mit einer Flüssigkeitskühlung ausgestattet ist.

Der Vorsprung ist ein thermisch hochbelastetes Bauteil. Zum einen passiert das gesamte Abgas der Brennkraftmaschine diese Sammelstelle im Abgassystem, wohingegen beispielsweise eine einzelne Abgasleitung lediglich mit dem Abgas eines Zylinders beaufschlagt wird. Die Abgasmenge, die Wärme an den Zylinderkopf abgibt, ist folglich an dieser Stelle des Leitungssystems am größten. Zum anderen ist der Vorsprung kontinuierlich mit heißen Abgasen beaufschlagt. Zudem werden die Abgasströmungen der einzelnen Abgasleitungen in dem als der Sammelstelle fungierenden Vorsprung prinzipbedingt mehr oder weniger stark umgelenkt. Die einzelnen Abgasströmungen haben daher in diesem Bereich - zumindest teilweise - eine Geschwindigkeitskomponente, die senkrecht auf den Wandungen der Abgas führenden Leitungen steht, wodurch der Wärmeübergang durch Konvektion und folglich die thermische Belastung des Vorsprungs bzw. Zylinderkopfes zusätzlich erhöht wird.

Aus den genannten Gründen ist es daher vorteilhaft, den Vorsprung mit einer Flüssigkeitskühlung auszustatten.

Vorteilhaft können in diesem Zusammenhang Ausführungsformen sein, bei denen die Flüssigkeitskühlung des Vorsprungs mit der Flüssigkeitskühlung der Brennkraftmaschine verbunden ist. Zum einen können die bereits vorhandenen Komponenten der Flüssigkeitskühlung der Brennkraftmaschine, wie Wärmetauscher und Pumpe, genutzt werden, um das Kühlmittel durch den Vorsprung zu fördern und zu kühlen. Zum anderen erwärmt sich das gemeinsame Kühlmittel nach einem Kaltstart schneller, da der thermisch hochbelastete Vorsprung zusätzlich Wärme in das Kühlmittel einträgt.

Die zweite der Erfindung zugrunde liegende Teilaufgabe, nämlich ein Verfahren zum Betreiben einer Brennkraftmaschine gemäß einer zuvor beschriebenen Art aufzuzeigen, bei der die Turbine eines Abgasturboladers als zuschaltbare Turbine ausgeführt ist, wird gelöst durch ein Verfahren, bei dem die zuschaltbare Turbine aktiviert wird, sobald die Abgasmenge eine vorgebbare Abgasmenge übersteigt.

Das im Zusammenhang mit der erfindungsgemäßen Brennkraftmaschine Gesagte gilt ebenfalls für das erfindungsgemäße Verfahren.

Bei einer nicht aufgeladenen Brennkraftmaschine korrespondiert die Abgasmenge näherungsweise mit der Drehzahl und/oder der Last der Brennkraftmaschine und zwar abhängig von der im Einzelfall verwendeten Laststeuerung. Bei einem traditionellen Ottomotor mit Quantitätsregelung steigt die Abgasmenge auch bei konstanter Drehzahl mit zunehmender Last an, wohingegen die Abgasmenge bei traditionellen Dieselmotoren mit Qualitätsregelung lediglich drehzahlabhängig ist, weil bei Laständerung und konstanter Drehzahl die Gemischzusammensetzung, nicht jedoch die Gemischmenge variiert wird.

Liegt der erfindungsgemäßen Brennkraftmaschine eine Quantitätsregelung zugrunde, bei der die Last über die Menge an Frischgemisch gesteuert wird, kann die Abgasmenge die relevante, d. h. vorgebbare, Abgasmenge auch bei konstanter Drehzahl übersteigen, wenn die Last der Brennkraftmaschine eine vorgebbare Last übersteigt, da die Abgasmenge mit der Last korreliert, wobei die Abgasmenge mit zunehmender Last steigt und mit abnehmender Last sinkt.

Liegt der Brennkraftmaschine hingegen eine Qualitätsregelung zugrunde, bei der die Last über die Zusammensetzung des Frischgemischs gesteuert wird und sich die Abgasmenge nahezu ausschließlich mit der Drehzahl ändert, d. h. proportional zur Drehzahl ist, übersteigt die Abgasmenge unabhängig von der Last die vorgebbare Abgasmenge, wenn die Drehzahl der Brennkraftmaschine eine vorgebbare Drehzahl übersteigt.

Die erfindungsgemäße Brennkraftmaschine ist eine aufgeladene Brennkraftmaschine, so dass zusätzlich der Ladedruck auf der Ansaugseite zu berücksichtigen ist, der sich mit der Last und/oder der Drehzahl ändern kann und Einfluß auf die Abgasmenge hat. Die vorstehend dargelegten Zusammenhänge betreffend die Abgasmenge und die Last bzw. Drehzahl gelten folglich in dieser allgemeinen Form nur bedingt. Daher stellt das erfindungsgemäße Verfahren ganz allgemein auf die Abgasmenge ab und nicht auf die Last bzw. Drehzahl.

Wenn die Abgasmenge die vorgebbare Abgasmenge wieder unterschreitet, wird die zuschaltbare Turbine erneut deaktiviert.

Vorteilhaft sind Verfahrensvarianten, bei denen die zuschaltbare Turbine aktiviert wird, sobald die Abgasmenge eine vorgebbare Abgasmenge übersteigt und für eine vorgebbare Zeitspanne *Δt₁* größer ist als diese vorgegebene Abgasmenge.

Die Einführung einer zusätzlichen Bedingung für das Aktivieren der zuschaltbaren Turbine soll ein zu häufiges Schalten verhindern, insbesondere ein Aktivieren der zuschaltbaren Auslaßöffnungen, wenn die Abgasmenge nur kurzzeitig die vorgegebene Abgasmenge überschreitet und dann wieder fällt bzw. um den vorgegebenen Wert für die Abgasmenge schwankt, ohne dass das Überschreiten ein Zuschalten der Turbine rechtfertigen würde.

Aus den zuvor genannten Gründen sind auch Verfahrensvarianten vorteilhaft, bei denen die zuschaltbare Turbine deaktiviert wird, sobald die Abgasmenge eine vorgebbare Abgasmenge unterschreitet und für eine vorgebbare Zeitspanne *Δt₂* kleiner ist als diese vorgegebene Abgasmenge.

Ist die kontinuierlich von Abgas durchströmte Turbine eine Waste-Gate-Turbine, deren Bypaßleitung stromaufwärts der zuschaltbaren Turbine in den dazugehörigen Abgaskrümmer mündet, sind Ausführungsformen des Verfahrens vorteilhaft, bei denen die zuschaltbare Turbine kurz vor Aktivierung durch Öffnen eines in der Bypaßleitung angeordneten Absperrelementes beschleunigt wird.

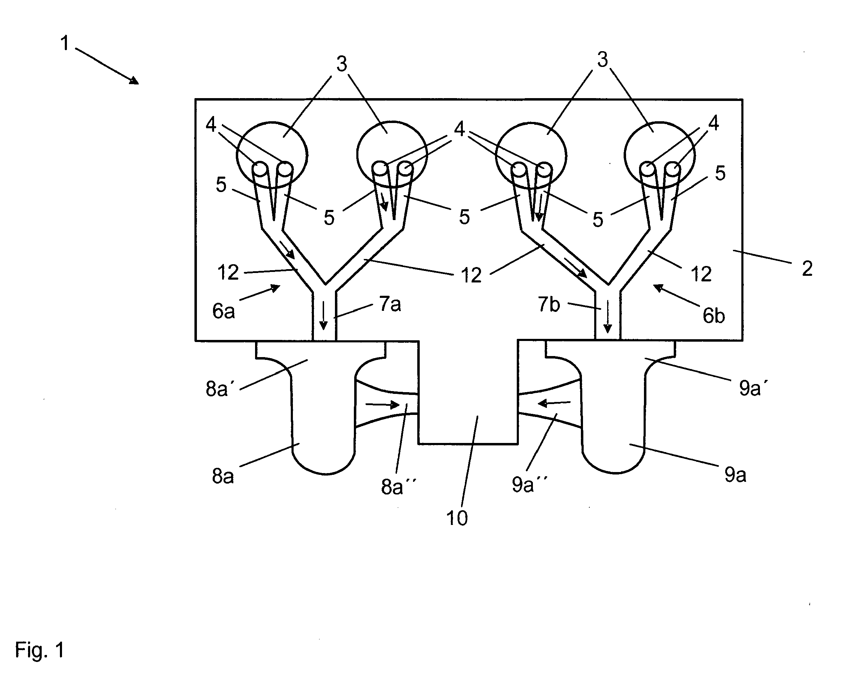

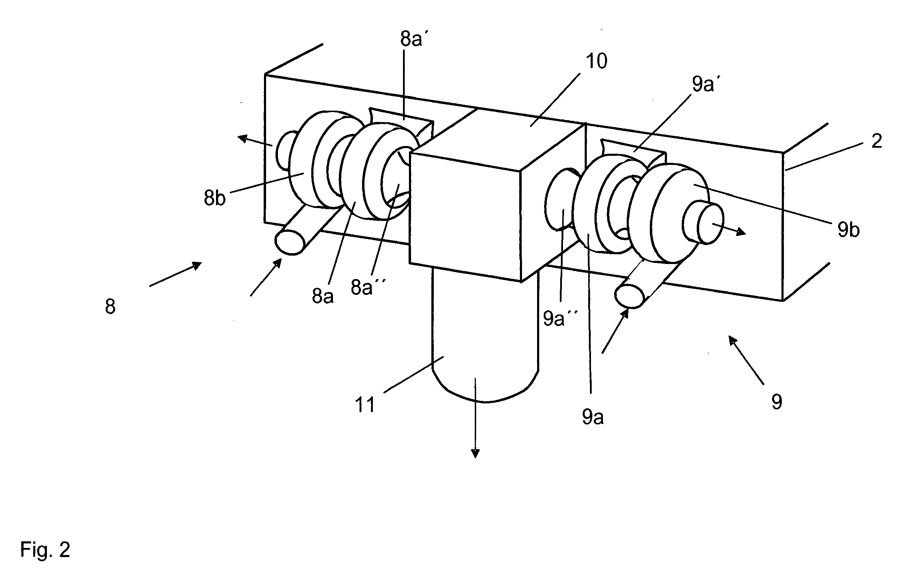

Im Folgenden wird die Erfindung anhand von zwei Ausführungsbeispielen gemäß den Figuren 1 und 2 näher beschrieben. Hierbei zeigt:
- Fig. 1: schematisch in einer Draufsicht eine erste Ausführungsform der Brennkraftmaschine, und
- Fig. 2: schematisch in einer perspektivischen Darstellung eine zweite Ausführungsform der Brennkraftmaschine.

Figur 1 zeigt schematisch in einer Draufsicht eine erste Ausführungsform der Brennkraftmaschine 1. Es handelt es sich um einen Vier-Zylinder-Reihenmotor, bei dem die vier Zylinder 3 entlang der Längsachse des Zylinderkopfes 2, d. h. in Reihe, angeordnet sind.

Jeder Zylinder 3 weist zwei Auslaßöffnungen 4 zum Abführen der Abgase auf, wobei sich an jede Auslaßöffnung 4 eine Abgasleitung 5 anschließt.

Die Abgasleitungen 5 der Zylinder 3 führen zu einer dem Zylinder 3 zugehörigen Teilabgasleitung 12 zusammen, bevor diese Teilabgasleitungen 12 innerhalb des Zylinderkopfes 2 unter Ausbildung von zwei integrierten Abgaskrümmern 6a, 6b zu zwei Gesamtabgasleitungen 7a, 7b zusammenführen, welche auf der Seite der Abgaskrümmer 6a, 6b, die den Zylindern 3 abgewandt ist, aus dem Zylinderkopf 2 austreten und zwar entlang der Längsachse des Zylinderkopfes 2 beabstandet zueinander.

Bei der in Figur 1 dargestellten Ausführungsform bilden jeweils zwei benachbarte Zylinder 3 eine Zylindergruppe, deren Abgasleitungen 5 zusammenführen. Die erste Gesamtabgasleitung 7a der ersten Zylindergruppe ist mit dem Eintrittsbereich 8a' der Turbine 8a eines ersten Abgasturboladers und die zweite Gesamtabgasleitung 7b der zweiten Zylindergruppe mit dem Eintrittsbereich 9a' der Turbine 9a eines zweiten Abgasturboladers verbunden.

Der Zylinderkopf 2 weist einen balkonartigen Vorsprung 10 auf, der zwischen den aus dem Zylinderkopf 2 austretenden Gesamtabgasleitungen 7a, 7b angeordnet ist und der auf jeder der beiden Seiten, die einer Turbine 8a, 9a zugewandt ist, eine Öffnung aufweist, die mit dem Austrittsbereich 8a", 9a" der jeweiligen Turbine 8a, 9a verbunden ist. Die sich an die beiden Öffnungen anschließenden Kanäle führen innerhalb des Vorsprungs 10 zu einer gemeinsamen Leitung zusammen, welche aus dem Vorsprung 10 austritt (nicht dargestellt).

Figur 2 zeigt schematisch in einer perspektivischen Darstellung eine zweite Ausführungsform der Brennkraftmaschine 1. Es soll nur ergänzend zu Figur 1 ausgeführt werden, weshalb im Übrigen Bezug genommen wird auf Figur 1 und die dazugehörige Beschreibung. Es wurden dieselben Bezugszeichen für dieselben Bauteile verwendet.

Die Brennkraftmaschine 1 ist zwecks Aufladung mit zwei Abgasturboladern 8, 9 ausgestattet. Jeder Abgasturbolader 8, 9 umfaßt eine Turbine 8a, 9a und einen Verdichter 8b, 9b. Das heiße Abgas entspannt sich in den Turbinen 8a, 9a unter Energieabgabe und die Verdichter 8b, 9b komprimieren die Ladeluft, die via Ansaugleitungen den Zylindern zugeführt wird, wodurch eine Aufladung der Brennkraftmaschine 1 erreicht wird.

Das aus den Turbinen 8a, 9a austretende Abgas wird im Vorsprung 10 gesammelt und via gemeinsamer Leitung 11, die aus dem Vorsprung 10 austritt, weitergeleitet. Vorliegend tritt die gemeinsame Leitung 11 auf der Seite des Vorsprungs 10 aus, die der Montage-Stirnseite zugewandt ist, an welcher der Zylinderkopf 2 mit einem Zylinderblock verbindbar ist.

### Bezugszeichen

- 1: aufgeladene Brennkraftmaschine
- 2: Zylinderkopf
- 3: Zylinder
- 4: Auslaßöffnung
- 5: Abgasleitung
- 6a: erster Abgaskrümmer
- 6b: zweiter Abgaskrümmer
- 7a: erste Gesamtabgasleitung
- 7b: zweite Gesamtabgasleitung
- 8: erster Abgasturbolader
- 8a: erste Turbine
- 8a': Eintrittsbereich der ersten Turbine
- 8a": Austrittsbereich der ersten Turbine
- 8b: erster Verdichter
- 9: zweiter Abgasturbolader
- 9a: zweite Turbine
- 9a': Eintrittsbereich der zweiten Turbine
- 9a": Austrittsbereich der zweiten Turbine
- 9b: zweiter Verdichter
- 10: Vorsprung
- 11: gemeinsame Leitung
- 12: Teilabgasleitung

- L: Abstand der Gesamtabgasleitungen
- D: Durchmesser eines Zylinders

## Patentansprüche

1. Aufgeladene Brennkraftmaschine (1) mit mindestens zwei Abgasturboladern (8, 9) und mindestens einem Zylinderkopf (2) mit mindestens zwei entlang der Längsachse des Zylinderkopfes (2) in Reihe angeordneten Zylindern (3), von denen jeder mindestens eine Auslaßöffnung (4) zum Abführen der Abgase aufweist, an die sich eine Abgasleitung (5) anschließt, bei der die Abgasleitungen (5) von mindestens zwei Zylindern (3) innerhalb des mindestens einen Zylinderkopfes (2) unter Ausbildung von zwei integrierten Abgaskrümmern (6a, 6b) zu zwei Gesamtabgasleitungen (7a, 7b) zusammenführen, welche auf der Seite der Abgaskrümmer (6a, 6b), die den Zylindern (3) abgewandt ist, aus dem Zylinderkopf (2) - entlang der Längsachse des Zylinderkopfes (2) beabstandet zueinander - austreten, wobei eine erste Gesamtabgasleitung (7a) mit dem Eintrittsbereich (8a') der Turbine (8a) eines ersten Abgasturboladers (8) und eine zweite Gesamtabgasleitung (7b) mit dem Eintrittsbereich (9a') der Turbine (9a) eines zweiten Abgasturboladers (9) verbunden ist,
**dadurch gekennzeichnet, dass**
der mindestens eine Zylinderkopf (2) einen balkonartigen Vorsprung (10) aufweist, der zwischen den aus dem mindestens einen Zylinderkopf (2) austretenden Gesamtabgasleitungen (7a, 7b) angeordnet ist und der auf jeder der beiden Seiten, die jeweils einer Turbine (8a, 9a) zugewandt ist, eine Öffnung aufweist, die mit dem Austrittsbereich (8a", 9a") der jeweiligen Turbine (8a, 9a) verbunden ist, wobei die sich an die beiden Öffnungen anschließenden Kanäle zu einer gemeinsamen Leitung (11) zusammenführen, welche aus dem Vorsprung (10) austritt.

2. Aufgeladene Brennkraftmaschine (1) nach Anspruch 1, **dadurch gekennzeichnet, dass** die beiden aus dem mindestens einen Zylinderkopf (2) austretenden Gesamtabgasleitungen (7a, 7b) einen Abstand L entlang der Längsachse des Zylinderkopfes (2) aufweisen, für den gilt: L ≥ D, wobei D der Durchmesser eines Zylinders (3) ist.

3. Aufgeladene Brennkraftmaschine (1) nach Anspruch 1 oder 2, **dadurch gekennzeichnet, dass** die beiden aus dem mindestens einen Zylinderkopf (2) austretenden Gesamtabgasleitungen (7a, 7b) einen Abstand L entlang der Längsachse des Zylinderkopfes (2) aufweisen, für den gilt: L ≥ 1.5 D, wobei D der Durchmesser eines Zylinders (3) ist.

4. Aufgeladene Brennkraftmaschine (1) nach einem der vorherigen Ansprüche, bei welcher der mindestens eine Zylinderkopf (2) an einer Montage-Stirnseite mit einem Zylinderblock verbindbar ist, **dadurch gekennzeichnet, dass** die gemeinsame Leitung (11), die aus dem Vorsprung (10) austritt, auf der der Montage-Stirnseite zugewandten Seite austritt.

5. Aufgeladene Brennkraftmaschine (1) nach einem der vorherigen Ansprüche, **dadurch gekennzeichnet, dass**
- mindestens zwei Zylinder (3) in der Art konfiguriert sind, dass sie zwei Gruppen mit jeweils mindestens einem Zylinder (3) bilden, und
- die Abgasleitungen (5) der Zylinder (3) jeder Zylindergruppe unter Ausbildung eines integrierten Abgaskrümmers (6a, 6b) innerhalb des mindestens einen Zylinderkopfes (2) jeweils zu einer Gesamtabgasleitung (7a, 7b) zusammenführen.

6. Aufgeladene Brennkraftmaschine (1) nach Anspruch 5, bei welcher der mindestens eine Zylinderkopf (2) mindestens drei in Reihe angeordnete Zylinder (3) aufweist, **dadurch gekennzeichnet, dass** die erste Zylindergruppe die außenliegenden Zylinder (3) und die zweite Zylindergruppe den mindestens einen innenliegenden Zylinder (3) umfaßt.

7. Aufgeladene Brennkraftmaschine (1) nach Anspruch 5, bei welcher der mindestens eine Zylinderkopf (2) mindestens vier in Reihe angeordnete Zylinder (3) aufweist, **dadurch gekennzeichnet, dass** jede Zylindergruppe zwei benachbarte Zylinder (3) umfaßt.

8. Aufgeladene Brennkraftmaschine (1) nach einem der vorherigen Ansprüche, **dadurch gekennzeichnet, dass** jeder Zylinder (3) mindestens zwei Auslaßöffnungen (4) zum Abführen der Abgase aufweist, wobei sich an jede Auslaßöffnung (4) eine Abgasleitung (5) anschließt.

9. Aufgeladene Brennkraftmaschine (1) nach einem der vorherigen Ansprüche, **dadurch gekennzeichnet, dass** die zwei integrierten Abgaskrümmer (6a, 6b) miteinander verbunden sind.

10. Aufgeladene Brennkraftmaschine (1) nach Anspruch 9, **dadurch gekennzeichnet, dass** die Turbine (8a, 9a) eines Abgasturboladers (8, 9) als zuschaltbare Turbine ausgeführt ist.

11. Aufgeladene Brennkraftmaschine (1) nach Anspruch 10, **dadurch gekennzeichnet, dass** stromaufwärts der zuschaltbaren Turbine ein Absperrelement in der dazugehörigen Gesamtabgasleitung (7a, 7b) angeordnet ist.

12. Aufgeladene Brennkraftmaschine (1) nach einem der Ansprüche 1 bis 4, **dadurch gekennzeichnet, dass** jeder Zylinder (3) mindestens zwei Auslaßöffnungen (4) aufweist, von denen mindestens eine als zuschaltbare Auslaßöffnung (4) ausgebildet ist, wobei die Abgasleitungen (5) der zuschaltbaren Auslaßöffnungen (4) von mindestens zwei Zylindern (3) unter Ausbildung des ersten Abgaskrümmers (6a) zu der ersten Gesamtabgasleitung (7a) zusammenführen, welche mit der Turbine (8a) des ersten Abgasturboladers (8) verbunden ist, und die Abgasleitungen (5) der anderen Auslaßöffnungen (4) der mindestens zwei Zylinder (3) unter Ausbildung des zweiten Abgaskrümmers (6b) zu der zweiten Gesamtabgasleitung (7b) zusammenführen, welche mit der Turbine (9a) des zweiten Abgasturboladers (9) verbunden ist.

13. Aufgeladene Brennkraftmaschine (1) nach Anspruch 12, **dadurch gekennzeichnet, dass** der erste Abgaskrümmer (6a) und der zweite Abgaskrümmer (6b) stromaufwärts der beiden Turbinen (8a, 9a) via mindestens einem nicht verschließbaren Verbindungskanal dauerhaft miteinander verbunden sind, wobei der kleinste Querschnitt A_{Quer,V} des mindestens einen Verbindungskanals kleiner ist als der kleinste Querschnitt A_{Quer,Ex} einer Abgasleitung (5).

14. Aufgeladene Brennkraftmaschine (1) nach einem der vorherigen Ansprüche, **dadurch gekennzeichnet, dass** der Vorsprung (10) mit einer Flüssigkeitskühlung ausgestattet ist.

15. Verfahren zum Betreiben einer aufgeladenen Brennkraftmaschine (1) nach einem der vorherigen Ansprüche, bei der die Turbine (8a, 9a) eines Abgasturboladers (8, 9) als zuschaltbare Turbine ausgeführt ist, **dadurch gekennzeichnet, dass** die zuschaltbare Turbine (8a, 9a) aktiviert wird, sobald die Abgasmenge eine vorgebbare Abgasmenge übersteigt.

## Claims

1. Supercharged internal combustion engine (1) having at least two exhaust-gas turbochargers (8, 9) and having at least one cylinder head (2) with at least two cylinders (3) in an in-line arrangement along the longitudinal axis of the cylinder head (2), each of which cylinders has at least one outlet opening (4) for discharging the exhaust gases, said outlet opening being adjoined by an exhaust line (5), wherein the exhaust lines (5) of at least two cylinders (3) merge, to form two overall exhaust lines (7a, 7b), within the at least one cylinder head (2) such that two integrated exhaust manifolds (6a, 6b) are formed, which overall exhaust lines emerge from the cylinder head (2) - spaced apart from one another along the longitudinal axis of the cylinder head (2) - on that side of the exhaust manifolds (6a, 6b) which faces away from the cylinders (3), wherein a first overall exhaust line (7a) is connected to the inlet region (8a') of the turbine (8a) of a first exhaust-gas turbocharger (8) and a second overall exhaust line (7b) is connected to the inlet region (9a') of the turbine (9a) of a second exhaust-gas turbocharger (9),
**characterized in that**
the at least one cylinder head (2) has a balcony-like projection (10) which is arranged between the overall exhaust lines (7a, 7b) emerging from the at least one cylinder head (2) and which, on each of the two sides which face towards in each case one turbine (8a, 9a), has an opening which is connected to the outlet region (8a", 9a") of the respective turbine (8a, 9a), wherein the ducts adjoining the two openings merge to form a common line (11) which emerges from the projection (10).

2. Supercharged internal combustion engine (1) according to Claim 1, **characterized in that** the two overall exhaust lines (7a, 7b) which emerge from the at least one cylinder head (2) have a spacing L along the longitudinal axis of the cylinder head (2), for which the following applies: L ≥ D, wherein D is the diameter of a cylinder (3).

3. Supercharged internal combustion engine (1) according to Claim 1 or 2, **characterized in that** the two overall exhaust lines (7a, 7b) which emerge from the at least one cylinder head (2) have a spacing L along the longitudinal axis of the cylinder head (2), for which the following applies: L ≥ 1.5 D, wherein D is the diameter of a cylinder (3).

4. Supercharged internal combustion engine (1) according to one of the preceding claims, in which the at least one cylinder head (2) can be connected at an assembly end side to a cylinder block, **characterized in that** the common line (11) which emerges from the projection (10) emerges on the side facing toward the assembly end side.

5. Supercharged internal combustion engine (1) according to one of the preceding claims, **characterized in that**
- at least two cylinders (3) are configured in such a way as to form two groups with in each case at least one cylinder (3), and
- the exhaust lines (5) of the cylinders (3) of each cylinder group merge, to form in each case one overall exhaust line (7a, 7b), within the cylinder head (2) such that an integrated exhaust manifold is formed (6a, 6b).

6. Supercharged internal combustion engine (1) according to Claim 5, in which the at least one cylinder head (2) has at least three cylinders (3) in an in-line arrangement, **characterized in that** the first cylinder group comprises the outer cylinders (3) and the second cylinder group comprises the at least one inner cylinder (3).

7. Supercharged internal combustion engine (1) according to Claim 5, in which the at least one cylinder head (2) has at least four cylinders (3) in an in-line arrangement, **characterized in that** each cylinder group comprises two adjacent cylinders (3).

8. Supercharged internal combustion engine (1) according to one of the preceding claims, **characterized in that** each cylinder (3) has at least two outlet openings (4) for discharging the exhaust gases, wherein each outlet opening (4) is adjoined by an exhaust line (5).

9. Supercharged internal combustion engine (1) according to one of the preceding claims, **characterized in that** the two integrated exhaust manifolds (6a, 6b) are connected to one another.

10. Supercharged internal combustion engine (1) according to Claim 9, **characterized in that** the turbine (8a, 9a) of one exhaust-gas turbocharger (8, 9) is designed as an activatable turbine.

11. Supercharged internal combustion engine (1) according to Claim 10, **characterized in that** a cut-off element is arranged upstream of the activatable turbine in the associated overall exhaust line (7a, 7b).

12. Supercharged internal combustion engine (1) according to one of Claims 1 to 4, **characterized in that** each cylinder (3) has at least two outlet openings (4), at least one of which is designed as an activatable outlet opening (4), wherein the exhaust lines (5) of the activatable outlet openings (4) of at least two cylinders (3) merge to form the first overall exhaust line (7a), such that the first exhaust manifold (6a) is formed, which first overall exhaust line is connected to the turbine (8a) of the first exhaust-gas turbocharger (8), and the exhaust lines (5) of the other outlet openings (4) of the at least two cylinders (3) merge to form the second overall exhaust line (7b), such that the second exhaust manifold (6b) is formed, which second overall exhaust line is connected to the turbine (9a) of the second exhaust-gas turbocharger (9).

13. Supercharged internal combustion engine (1) according to Claim 12, **characterized in that** the first exhaust manifold (6a) and the second exhaust manifold (6b) are permanently connected to one another upstream of the two turbines (8a, 9a) via at least one connecting duct which cannot be closed off, wherein the smallest cross section A_{Cross,CD} of the at least one connecting duct is smaller than the smallest cross section A_{Cross,Ex} of an exhaust line (5).

14. Supercharged internal combustion engine (1) according to one of the preceding claims, **characterized in that** the projection (10) is provided with a liquid cooling arrangement.

15. Method for operating a supercharged internal combustion engine (1) according to one of the preceding claims, in which the turbine (8a, 9a) of one exhaust-gas turbocharger (8, 9) is designed as an activatable turbine, **characterized in that** the activatable turbine (8a, 9a) is activated for as long as the exhaust-gas quantity exceeds a predefinable exhaust-gas quantity.

## Revendications

1. Moteur à combustion interne (1) à suralimentation comprenant au moins deux turbocompresseurs (8, 9) et au moins une culasse (2) avec au moins deux cylindres (3) disposés en rangée le long de l'axe longitudinal de la culasse (2), dont chacun présente au moins une ouverture de sortie (4) pour l'évacuation des gaz d'échappement, à laquelle se raccorde une conduite de gaz d'échappement (5), les conduites de gaz d'échappement (5) convergeant depuis au moins deux cylindres (3) à l'intérieur de l'au moins une culasse (2) en formant deux collecteurs de gaz d'échappement intégrés (6a, 6b) pour former deux conduites de gaz d'échappement combinées (7a, 7b), qui sortent du côté du collecteur de gaz d'échappement (6a, 6b) opposé aux cylindres (3) hors de la culasse (2) - le long de l'axe longitudinal de la culasse (2) à distance l'une de l'autre -, une première conduite de gaz d'échappement combinée (7a) étant connectée à la région d'entrée (8a') de la turbine (8a) d'un premier turbocompresseur (8) et une deuxième conduite de gaz d'échappement combinée (7b) étant connectée à la région d'entrée (9a') de la turbine (9a) d'un deuxième turbocompresseur (9),
**caractérisé en ce que**
l'au moins une culasse (2) présente une saillie de type balcon (10) qui est disposée entre les conduites de gaz d'échappement combinées (7a, 7b) sortant de l'au moins une culasse (2) et qui présente, sur chacun des deux côtés qui est à chaque fois tourné vers une turbine (8a, 9a), une ouverture qui est connectée à la région de sortie (8a", 9a") de la turbine respective (8a, 9a), les canaux se raccordant aux deux ouvertures convergeant pour former une conduite commune (11) qui sort de la saillie (10).

2. Moteur à combustion interne (1) à suralimentation selon la revendication 1, **caractérisé en ce que** les deux conduites de gaz d'échappement (7a, 7b) sortant de l'au moins une culasse (2) présentent une distance L le long de l'axe longitudinal de la culasse (2), pour laquelle on a L ≥ D, D étant le diamètre d'un cylindre (3).

3. Moteur à combustion interne (1) à suralimentation selon la revendication 1 ou 2, **caractérisé en ce que** les deux conduites de gaz d'échappement (7a, 7b) sortant de l'au moins une culasse (2) présentent une distance L le long de l'axe longitudinal de la culasse (2), pour laquelle on a L ≥ 1,5 D, D étant le diamètre d'un cylindre (3).

4. Moteur à combustion interne (1) à suralimentation selon l'une quelconque des revendications précédentes, dans lequel l'au moins une culasse (2) peut être connectée au niveau d'un côté frontal de montage à un bloc cylindres, **caractérisé en ce que** la conduite commune (11) qui sort de la saillie (10) sort du côté tourné vers le côté frontal de montage.

5. Moteur à combustion interne (1) à suralimentation selon l'une quelconque des revendications précédentes, **caractérisé en ce que**
- au moins deux cylindres (3) sont configurés de telle sorte qu'ils forment deux groupes ayant à chaque fois au moins un cylindre (3), et
- les conduites de gaz d'échappement (5) des cylindres (3) de chaque groupe de cylindres convergent en formant un collecteur de gaz d'échappement intégré (6a, 6b) à l'intérieur de l'au moins une culasse (2) pour former à chaque fois une conduite de gaz d'échappement combinée (7a, 7b).

6. Moteur à combustion interne (1) à suralimentation selon la revendication 5, dans lequel l'au moins une culasse (2) présente au moins trois cylindres (3) disposés en rangée, **caractérisé en ce que** le premier groupe de cylindres comprend les cylindres situés à l'extérieur (3) et le deuxième groupe de cylindres comprend un cylindre situé à l'intérieur (3).

7. Moteur à combustion interne (1) à suralimentation selon la revendication 5, dans lequel l'au moins une culasse (2) présente au moins quatre cylindres (3) disposés en rangée, **caractérisé en ce que** chaque groupe de cylindres comprend deux cylindres adjacents (3).

8. Moteur à combustion interne (1) à suralimentation selon l'une quelconque des revendications précédentes, **caractérisé en ce que** chaque cylindre (3) présente au moins deux ouvertures de sortie (4) pour l'évacuation des gaz d'échappement, une conduite de gaz d'échappement (5) se raccordant à chaque ouverture de sortie (4).

9. Moteur à combustion interne (1) à suralimentation selon l'une quelconque des revendications précédentes, **caractérisé en ce que** les deux collecteurs de gaz d'échappement intégrés (6a, 6b) sont connectés l'un à l'autre.

10. Moteur à combustion interne (1) à suralimentation selon la revendication 9, **caractérisé en ce que** la turbine (8a, 9a) d'un turbocompresseur à gaz d'échappement (8, 9) est réalisée sous forme de turbine commutable.

11. Moteur à combustion interne (1) à suralimentation selon la revendication 10, **caractérisé en ce qu'**en amont de la turbine commutable, un élément d'arrêt est disposé dans la conduite de gaz d'échappement combinée associée (7a, 7b).

12. Moteur à combustion interne (1) à suralimentation selon l'une quelconque des revendications 1 à 4, **caractérisé en ce que** chaque cylindre (3) présente au moins deux ouvertures de sortie (4) dont au moins une est réalisée sous forme d'ouverture de sortie commutable (4), les conduites de gaz d'échappement (5) des ouvertures d'échappement commutables (4) d'au moins deux cylindres (3) convergeant en formant le premier collecteur de gaz d'échappement (6a) pour former la première conduite de gaz d'échappement combinée (7a), qui est connectée à la turbine (8a) du premier turbocompresseur à gaz d'échappement (8), et les conduites de gaz d'échappement (5) des autres ouvertures de sortie (4) des au moins deux cylindres (3) convergeant en formant le deuxième collecteur de gaz d'échappement (6b) pour former la deuxième conduite de gaz d'échappement combinée (7b), qui est connectée à la turbine (9a) du deuxième turbocompresseur à gaz d'échappement (9).

13. Moteur à combustion interne (1) à suralimentation selon la revendication 12, **caractérisé en ce que** le premier collecteur de gaz d'échappement (6a) et le deuxième collecteur de gaz d'échappement (6b) sont connectés de manière durable l'un à l'autre en amont des deux turbines (8a, 9a) par le biais d'au moins un canal de connexion ne pouvant pas être fermé, la plus petite section transversale A_{Quer,V} de l'au moins un canal de connexion étant inférieure à la plus petite section transversale A_{Quer,Ex} d'une conduite de gaz d'échappement (5).

14. Moteur à combustion interne (1) à suralimentation selon l'une quelconque des revendications précédentes, **caractérisé en ce que** la saillie (10) est munie d'un refroidissement liquide.

15. Procédé pour faire fonctionner un moteur à combustion interne (1) à suralimentation selon l'une quelconque des revendications précédentes, dans lequel la turbine (8a, 9a) d'un turbocompresseur à gaz d'échappement (8, 9) est réalisée sous forme de turbine commutable, **caractérisé en ce que** la turbine commutable (8a, 9a) est activée dès que la quantité de gaz d'échappement dépasse une quantité prédéfinissable.
